# EUROPÄISCHE PATENTSCHRIFT

(11) **EP 0 767 334 B1**
(45) Veröffentlichungstag und Bekanntmachung des Hinweises auf die Patenterteilung: **07.01.1999**
(21) Anmeldenummer: 96111724.9
(22) Anmeldetag: 20.07.1996
(51) Int. Cl.: F16L 11/22, F16L 11/127

(54) **Mehrfachschlauch**
Multiple-hose
Tuyau souple multiple

(30) Priorität: 07.10.1995 DE 29515916 U
(43) Veröffentlichungstag der Anmeldung: 09.04.1997
(73) Patentinhaber: FESTO AG & Co, 73734 Esslingen (DE)
(72) Erfinder: Stoll, Kurt, Dr., 73732 Esslingen (DE)
(74) Vertreter: Abel, Martin, Dipl.-Ing.

(56) Entgegenhaltungen:
- EP-A- 0 428 368
- CH-A- 323 095
- DE-A- 3 601 741
- DE-U- 8 408 571
- DE-U-29 507 689

## Beschreibung

Die Erfindung betrifft einen Mehrfachschlauch für elektro-pneumatische Anwendungen, mit wenigstens zwei entlang einer in Schlauchlängsrichtung verlaufenden Solltrennstelle trennbar aneinander befestigten und aus biegbarem Kunststoffmaterial bestehenden Pneumatikschläuchen, und mit mindestens einer an den Pneumatikschläuchen angeordneten, ebenfalls aus biegbarem Kunststoffmaterial bestehenden Halteeinrichtung für elektrische Kabel, die einen in Schlauchlängsrichtung verlaufenden, von einer Haltewand begrenzten Kabelaufnahmeraum aufweist, der über eine sich über die gesamte Länge der Haltewand erstreckende schlitzartige Kabel-Einführöffnung zugänglich ist.

Bei einem in der DE-GM 84 08 571 beschriebenen Mehrfachschlauch dieser Art sind zwei Pneumatikschläuche vorgesehen, die für die Zu- und Abfuhr von Druckluft im Zusammenhang mit pneumatisch betätigten Arbeitszylindern verwendbar sind. Durch die integrale Ausgestaltung ist ein einfaches Verlegen ohne Schlauchgewirr möglich. Erst unmittelbar im Bereich der Anschlußstellen werden die Pneumatikschläuche so weit wie möglich an der Solltrennstelle voneinander abgelöst.

Eine an die Pneumatikschläuche angeformte Halteeinrichtung ermöglicht das parallele Verlegen eines elektrischen Kabels, das beispielsweise dem elektrischen Anschluß von Sensoren dient, mit denen der Pneumatikzylinder ausgestattet ist. Die Halteeinrichtung besteht aus einer einen Kabelaufnahmeraum begrenzenden Haltewand, die sich aus Wandabschnitten der Pneumatikschläuche sowie zwei streifenförmigen Klemmstegen zusammensetzt, wobei jeder Pneumatikschlauch einen der Klemmstege trägt. Durch den Abstand der Klemmstege wird eine Kabel-Einführöffnung gebildet, die das Einführen eines Kabels in den Kabelaufnahmeraum ermöglicht.

Bei dem bekannten Mehrfachschlauch hat sich als Nachteil erwiesen, daß in der Halteeinrichtung festgelegte Kabel beim Verlegen des Mehrfachschlauches leicht durch die Kabel-Einführöffnung hindurch herausrutschen und dadurch nicht mehr ausreichend fixiert sind. Desweiteren finden die Kabel im Bereich der aufgetrennten Längenabschnitte der Pneumatikschläuche keinen Halt mehr, weil die Klemmstege ihre Zuordnung zueinander verlieren.

Um den Halt eines Kabels zu verbessern, wird in der DE-GM 84 08 571 auch schon vorgeschlagen, auf eine besondere Halteeinrichtung zu verzichten und das elektrische Kabel unmittelbar an die Pneumatikschläuche anzukleben. Dies hat allerdings den Nachteil, daß sich die Haltefunktion nur ein einziges Mal ausnutzen läßt. Ist beispielsweise ein defektbedingter Austausch eines elektrischen Kabels erforderlich, so ist es vollständig von den Pneumatikschläuchen abzuziehen und das Ersatzkabel kann nurmehr auf konventionelle Weise unter Zuhilfenahme üblicher Schlauchbänder fixiert werden.

Desweiteren ist in der DE-GM 295 07 689 empfohlen worden, auch die Halteeinrichtung als abtrennbar an den Pneumatikschläuchen angeordneten Kabelschlauch auszubilden, durch den die elektrischen Kabel hindurch geführt werden. Die Vorteile dieser Lösung sind allerdings mit der Unzulänglichkeit verbunden, daß beim Austausch defekter Kabel ein zeitaufwendiges Einfädeln in den Kabelschlauch erforderlich ist.

Die vorliegende Erfindung hat sich zur Aufgabe gestellt, einen Mehrfachschlauch der eingangs genannten Art zu schaffen, der bei einfacher Austauschbarkeit einen sicheren Halt festzulegender Kabel auch während der Handhabung des Mehrfachschlauches gewährleistet.

Zur Lösung dieser Aufgabe ist vorgesehen, daß die Pneumatikschläuche und der Kabelaufnahmeraum in einer gemeinsamen Ebene verlaufend längsseits nebeneinanderliegend angeordnet sind, wobei die mindestens eine Halteeinrichtung den seitlichen Abschluß der Anordnung bildet und lediglich an dem unmittelbar benachbarten Pneumatikschlauch festgelegt ist, und daß die Haltewand derart ausgebildet ist, daß die Kabel-Einführöffnung in der gemeinsamen Ebene liegt und seitwärts von den Pneumatikschläuchen weggerichtet ist.

Somit ermöglicht die Kabel-Einführöffnung weiterhin eine leichte und rasche Montage oder Demontage elektrischer Kabel. Indem die Halteeinrichtung nicht gleichzeitig an mehreren Pneumatikschläuchen festgelegt ist, wird sie vom Auftrennen der Verbindung zweier benachbarter Pneumatikschläuche nicht beeinträchtigt und kann auch dann einen zuverlässigen Halt bieten, wenn der Mehrfachschlauch im Bereich der Solltrennstelle über eine längere Wegstrecke aufgetrennt ist. Die Anordnung der Pneumatikschläuche und des Kabelaufnahmeraumes in einer gemeinsamen Ebene hat den Effekt, daß der Mehrfachschlauch eine flachbandartige Gestalt erhält, so daß sich für Biegevorgänge während des Verlegens oder beim Auf- und Abwickeln des Mehrfachschlauches eine Vorzugsrichtung ergibt. Diese Vorzugsrichtung verläuft quer zu der gemeinsamen Ebene. In Verbindung mit der seitwärts weisenden Ausrichtung der Kabel-Einführöffnung hat dies den Effekt, daß im Kabelaufnahmeraum enthaltene Kabel beim Biegen des Mehrfachschlauches nicht aus ihrer Halterung herausgedrängt werden. Somit ist für die Kabel auch während des Verlegens des Mehrfachschlauches ein zuverlässiger Halt gewährleistet.

Vorteilhafte Weiterbildungen der Erfindung sind in den Unteransprüchen aufgeführt.

Zweckmäßigerweise ist auch die Halteeinrichtung schlauchartig ausgeführt und von einem längsgeschlitzten Kabelschlauch gebildet, der vergleichbar der Verbindung zwischen den Pneumatikschläuchen über eine Solltrennstelle am benachbarten Pneumatikschlauch angeordnet ist, so daß er sich ohne weiteres über eine gewünschte Wegstrecke abtrennen, bzw. abziehen läßt, sollten die Montagebedingungen es erfordern.

Der Mehrfachschlauch kann besonders einfach durch Kunststoff-Extrusion hergestellt werden, so daß er als Extrusionsteil beliebiger Länge vorliegt, das von Fall zu Fall auf das gewünschte Maß ablängbar ist.

Zweckmäßigerweise ist die Haltewand derart gestaltet, daß das Einführen eines Kabels in den Kabelaufnahmeraum durch einen Einklipsvorgang stattfindet. Hierzu ist die Breite der Kabel-Einführöffnung zweckmäßigerweise geringer gewählt als der Kabeldurchmesser, wobei sich die Kabel-Einführöffnung vorübergehend elastisch rückfedernd aufweitet, wenn ein Kabel hindurchgedrückt wird.

Das Einführen eines Kabels wird nochmals erleichtert, wenn die längsverlaufenden, die Kabel-Einführöffnung begrenzenden Randbereiche der Haltewand nach innen in Richtung zum Kanalaufnahmeraum abgebogen oder abgewinkelt sind. Bei entsprechender Formgebung stellt die Kabel-Einführöffnung außen eine sich verjüngende rinnenartige Vertiefung dar, die ein besonders leichtes Ansetzen eines einzuführenden Kabels ermöglicht. Die nach innen ragenden Randbereiche unterstützen überdies den Verbleib der Kabel im Kabelaufnahmeraum.

Nachfolgend wird die Erfindung anhand der beiliegenden Zeichnung näher erläutert. In dieser zeigen:
- Figur 1: eine bevorzugte Bauform des erfindungsgemäßen Mehrfachschlauches im Einsatz, schematisch dargestellt,
- Figur 2: einen Querschnitt durch den Mehrfachschlauch aus Figur 1 gemäß Schnittlinie II-II, und
- Figur 3: eine bevorzugte Ausgestaltung der Halteeinrichtung im Bereich der Kabeleinführöffnung in Teildarstellung.

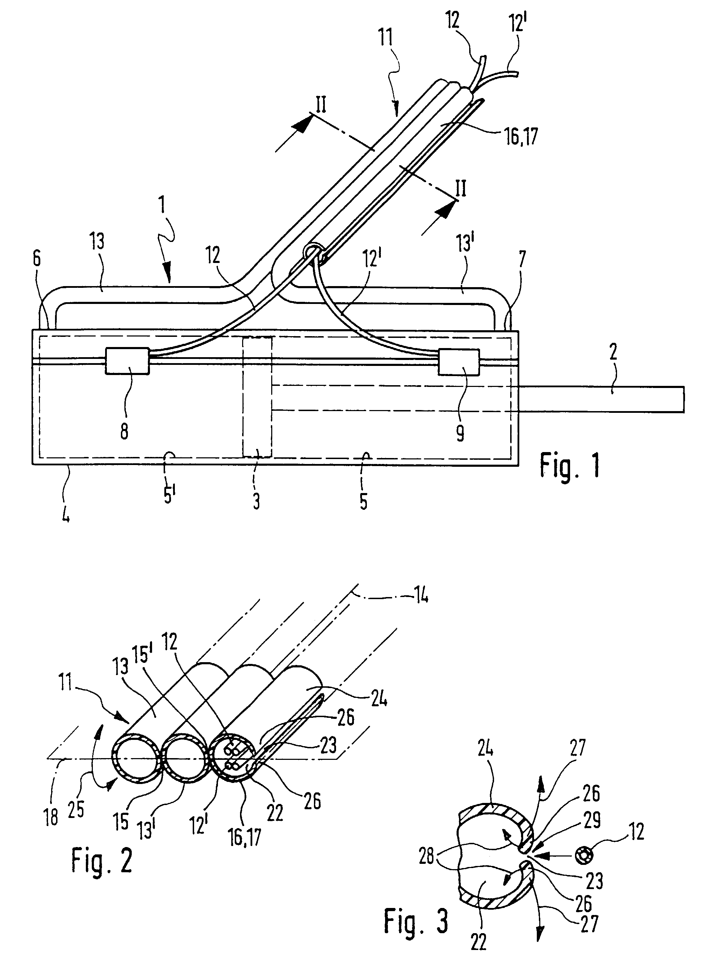

Aus Figur 1 geht in schematischer Darstellung ein pneumatisch betätigter Arbeitszylinder 1 hervor. Er verfügt in bekannter Weise über eine Kolbenstange 2, die mit einem Kolben 3 verbunden ist, der im Innern des Zylindergehäuses 4 zwei Arbeitsräume 5, 5' voneinander abteilt. Jedem Arbeitsraum 5, 5' ist ein Anschluß 6, 7 zugeordnet, über den das Betätigungsfluid eingespeist oder abgeführt wird, um den Kolben 3 und die Kolbenstange 2 zu verlagern.

Außen am Zylindergehäuse 2 sind zwei berührungslos von dem Kolben 3 betätigbare Sensoren 8, 9 angeordnet, die zur Positionserfassung des Kolbens 3 bzw. der Kolbenstange 2 dienen können.

Der Arbeitszylinder 1 ist unter Verwendung des erfindungsgemäßen Mehrfachschlauches 11 sowohl fluidtechnisch - hier: pneumatisch - als auch elektrisch angeschlossen. Der Mehrfachschlauch 11 dient gleichzeitig zur Zu- und/oder Abfuhr der Druckluft sowie zur Unterstützung der Verlegung elektrischer Kabel 12, 12', die für den Betrieb der Sensoren 8, 9 benötigt werden. Somit handelt es sich um einen Mehrfachschlauch für elektro-pneumatische Anwendungen.

Der beispielsgemäße Mehrfachschlauch umfaßt im einzelnen zwei aus biegbarem Kunststoffmaterial wie Polyurethanmaterial bestehende Pneumatikschläuche 13, 13', die entlang einer in Schlauchlängsrichtung 14 verlaufenden Solltrennstelle 15 leicht trennbar miteinander verbunden sind und eine Einheit darstellen. Zweckmäßigerweise sind die beiden Pneumatikschläuche 13, 13' identisch ausgebildet. Darüberhinaus umfaßt der beispielsgemäße Mehrfachschlauch 11 einen als Kabelschlauch 16 bezeichneten weiteren Schlauchkörper, der eine Halteeinrichtung 17 für die bereits erwähnten, in Schlauchlängsrichtung 14 verlegten Kabel 12, 12' bildet.

Der Kabelschlauch 16 besteht wie die Pneumatikschläuche 13, 13' aus einem biegbaren flexiblen Kunststoffmaterial und hat zweckmäßigerweise die gleiche Länge wie die Pneumatikschläuche 13, 13'.

Alle vorhandenen Schläuche 13, 13', 16 verlaufen parallel zueinander. Dabei ist die Anordnung so getroffen, daß alle Schläuche 13, 13', 16 in einer in Figur 2 angedeuteten gemeinsamen Ebene 18 verlaufen. Zu diesem Zweck sind die Schläuche 13, 13', 16 längsseits aneinandergesetzt und zu einem Schlauchpaket vereinigt. Einer der beiden außenliegenden Schläuche ist von dem Kabelschlauch 16 gebildet, der somit einen seitlichen Abschluß der Schlauchanordnung bildet. Er ist, wie die beiden Pneumatikschläuche 13, 13' untereinander, über eine weitere Solltrennstelle 15' leicht trennbar mit dem in der gemeinsamen Ebene 18 unmittelbar benachbarten Pneumatikschlauch 13' verbunden, die Solltrennstellen 15, 15' verlaufen parallel zueinander in Schlauchlängsrichtung 14.

Der die Halteeinrichtung 17 darstellende Kabelschlauch 16 begrenzt im Innern einen Kabelaufnahmeraum 22. Er ist über eine schlitzartige Kabel-Einführöffnung 23 zugänglich, die in der als Haltewand 24 bezeichneten Schlauchwand des Kabelschlauches 16 vorgesehen ist. Diese Kabel-Einführöffnung 23 erstreckt sich über die gesamte Länge der Haltewand 24 bzw. des Kabelschlauches 16, wobei sie parallel zur Schlauchlängsrichtung 14 verläuft und eine radiale Verbindung zwischen der Umgebung und dem Kabelaufnahmeraum 22 herstellt. Beim Ausführungsbeispiel ist der Kabelschlauch 16 nach Art eines über seine gesamte Länge längsgeschlitzten Schlauches ausgeführt.

Durch die Kabel-Einführöffnung 23 hindurch lassen sich elektrische Kabel 12, 12' nach Bedarf seitwärts in den Kabelaufnahmeraum 22 einbringen oder herausnehmen. Weil der Kabelaufnahmeraum 22 dadurch über seine gesamte Länge zugänglich ist, ist der entsprechende Montageaufwand sehr gering und erleichtert vor allem den Austausch defekter Elektrokabel.

Durch die flächige Nebeneinanderanordnung der Pneumatikschläuche 13, 13' und der Halteeinrichtung 17 erhält der Mehrfachschlauch eine flachbandähnliche Gestalt. Dies führt dazu, daß er über eine bevorzugte Biegerichtung 25 verfügt, die quer bzw. rechtwinklig zu der gemeinsamen Ebene 18 verläuft. In der gemeinsamen Ebene 18 ist das Widerstandsmoment erheblich größer, so daß der Mehrfachschlauch beim Verlegen praktisch nur in der erwähnten bevorzugten Biegerichtung 25 relevante Verformungen erfährt.

Dieser Effekt ist bei der Anordnung Kabel-Einführöffnung 23 ausgenutzt. Diese ist entgegensetzt der Anordnung von Pneumatikschläuchen 13, 13' plaziert, so daß sie in der gemeinsamen Ebene 18 liegt, allerdings seitwärts von den Pneumatikschläuchen 13, 13' wegweist ist. Zweckmäßigerweise liegt sie der zugeordneten Solltrennstelle 15' diametral gegenüber. Diese Schlitzanordnung bzw. -ausrichtung hat den Effekt, daß bei den üblicherweise auftretenden Verformungen des Mehrfachschlauches kaum eine Tendenz der elektrischen Kabel 12, 12' festzustellen ist, durch die Kabeleinführöffnung 23 ungewollt aus dem Kabelaufnahmeraum 22 auszutreten.

Indem die Haltewand 24 beim Ausführungsbeispiel aus biegeelastischem Kunststoffmaterial besteht, läßt sich die Kabel-Einführöffnung 23 bei entsprechender Beaufschlagung der sie begrenzenden Randbereiche 26 der Haltewand 24 reversibel aufweiten. Daher ist die im unbeaufschlagten Zustand vorhandene Breite der Kabel-Einführöffnung 23 zweckmäßigerweise geringer gewählt als der Querschnitt der aufzunehmenden Kabel 12, 12'. Diese lassen sich einfach dadurch im Kabelaufnahmeraum 22 anordnen, indem sie durch die Kabel-Einführöffnung 23 hindurchgedrückt und dadurch praktisch in die Halteeinrichtung 17 eingeklipst werden.

Der Einklips- bzw. Einschnappvorgang wird vorteilhaft unterstützt, wenn die Kabel-Einführöffnung 23, im Querschnitt gesehen, sich in Richtung zum Kabelaufnahmeraum 22 verjüngend ausgebildet ist. Beispielsweise ergibt sich eine solche Ausgestaltung dadurch, daß die erwähnten Randbereiche 26 der Haltewand 24, wie in Figur 3 angedeutet, nach innen in Richtung zum Kabelaufnahmeraum 22 umgebogen ausgebildet sind. Dadurch ergibt sich im äußeren Bereich der Kabel-Einführöffnung 23 eine rinnenähnliche, sich zum Kabelaufnahmeraum 22 hin verjüngende Vertiefung 29, die das Ansetzen eines zu montierenden Kabels 12 im Bereich der Kabel-Einführöffnung 23 erleichtert. Beim Hineindrücken des Kabels 12 wird die Haltewand 24 gemäß Pfeilen 27 beispielsweise etwa tangential aufgespreizt. Bei entsprechender Biegeelastizität der Randbereiche 26 kann auch vorgesehen sein, daß diese gemäß Pfeilen 28 nach innen in Richtung zum Kabelaufnahmeraum 22 elastisch umbiegbar sind.

Es kann auch einfach vorgesehen sein, daß die die Kabel-Einführöffnung 23 seitlich begrenzenden Flächen einen Schrägverlauf besitzen, um die sich verjüngende Charakteristik zu erhalten.

Prinzipiell könnten die Schläuche 13, 13', 16 entlang den Solltrennstellen 15, 15' abreißbar miteinander verklebt sein. Beim Ausführungsbeispiel sind die vorhandenen Schläuche hingegen einstückig miteinander verbunden, wobei die Verbindung zweckmäßigerweise dadurch erzielt wird, daß man den Mehrfachschlauch 11 als einstückiges Extrusionsteil herstellt. Dieses kann in Meterware mit beliebiger Länge gefertigt werden, so daß es später für den gewünschten Einsatzzweck lediglich noch maßgerecht abzulängen ist.

Die Wandstärke der Pneumatikschläuche 13, 13' ist dem geplanten Betriebsdruck entsprechend ausgeführt. Da die Halteeinrichtung 17 keinen Druckbelastungen ausgesetzt ist, kann ihre Haltewand 24 über eine dünnere Wandstärke verfügen, so daß die Biegsamkeit des Mehrfachschlauches kaum beeinträchtigt wird.

Indem der Kabelaufnahmeraum 22 zumindest größtenteils von der Haltewand 24 umschlossen ist, übt die Halteeinrichtung 17 auch eine Schutzfunktion aus und schützt die empfindlichen Kabel vor Beschädigung. Abgesehen von der gezeigten Ausgestaltung, bei der die Kabel-Einführöffnung 23 ständig einen Spalt weit offen ist, kann die Kabel-Einführöffnung 23 ohne weiteres auch so ausgeführt werden, daß die sie begrenzenden Randbereiche 26 der Haltewand 24 normalerweise unmittelbar aneinander anliegen, so daß bei eingelegten Kabeln 12, 12' ein über den Umfang vollständig geschlossener Kabelaufnahmeraum 22 vorliegt.

Bei dem gezeigten Anwendungsfall gemäß Figuren 1 und 2 verlaufen in dem Kabelaufnahmeraum 22 zwei separate elektrische Kabel 12, 12', die jeweils mehradrig ausgeführt sind. Es handelt sich insbesondere um zweiadrige Kabel, über die der Anschluß eines jeweiligen Sensors 8, 9 erfolgt.

Der beispielsgemäße Mehrfachschlauch ist als Dreifachschlauch ausgeführt, wobei die beiden Pneumatikschläuche 13, 13' an der einen Längsseite durch den einen Kabelschlauch 16 flankiert sind. Denkbar wäre aber auch eine größere Anzahl von Schläuchen zu dem Mehrfachschlauch zusammenzufassen.

Als besonders vorteilhaft kann sich eine Ausführungsform erweisen, bei der die Schlauchanordnung an beiden Längsseiten jeweils von einem Kabelaufnahmeraum 22 bzw. einer Halteeinrichtung 17 flankiert ist. Dies ermöglicht es, jedem Pneumatikschlauch einen Kabelschlauch 16 zuzuordnen und nach dem Auftrennen der Solltrennverbindung zwischen den Pneumatikschläuchen 13, 13' jeweils ein Schlauchpaar bestehend aus einem Pneumatikschlauch 13 bzw. 13' und einem Kabelschlauch 16 unabhängig voneinander zu den zugeordneten Anschlußstellen zu verlegen.

Bevorzugt verfügen die in dem Mehrfachschlauch zusammengefaßten Schläuche 13, 13', 16 im Querschnitt über identische Außenabmessungen. Zweckmäßigerweise sind sie mit kreisrundem Querschnitt ausgeführt.

Die Haltewand 24 der Halteeinrichtung 17 könnte durchaus auch von beispielsweise zwei leisten- bzw. streifenähnlichen längsverlaufenden Wandabschnitten gebildet sein, die voneinander getrennt und unter gegenseitigem Abstand am benachbarten Pneumatikschlauch 13' angeformt sind, wobei der zwischen den Wandabschnitten liegende Wandabschnitt des Pneumatikschlauches 13' ebenfalls einen Bestandteil der Haltewand 24 bildet.

## Patentansprüche

1. Mehrfachschlauch für elektro-pneumatische Anwendungen, mit wenigstens zwei entlang einer in Schlauchlängsrichtung (14) verlaufenden Solltrennstelle (15) trennbar aneinander befestigten und aus biegbarem Kunststoffmaterial bestehenden Pneumatikschläuchen (13, 13'), und mit mindestens einer an den Pneumatikschläuchen angeordneten, ebenfalls aus biegbarem Kunststoffmaterial bestehenden Halteeinrichtung (17) für elektrische Kabel (12, 12'), die einen in Schlauchlängsrichtung (14) verlaufenden, von einer Haltewand (24) begrenzten Kabelaufnahmeraum (22) aufweist, der über eine sich über die gesamte Länge der Haltewand (24) erstreckende schlitzartige Kabel-Einführöffnung zugänglich ist, dadurch gekennzeichnet, daß die Pneumatikschläuche (13, 13') und der Kabelaufnahmeraum (22) in einer gemeinsamen Ebene verlaufend längsseits nebeneinanderliegend angeordnet sind, wobei die mindestens eine Halteeinrichtung (17) den seitlichen Abschluß der Anordnung bildet und lediglich an dem unmittelbar benachbarten Pneumatikschlauch (13') festgelegt ist, und daß die Haltewand (24) derart ausgebildet ist, daß die Kabel-Einführöffnung (23) in der gemeinsamen Ebene (18) liegt und seitwärts von den Pneumatikschläuchen (13, 13') weggerichtet ist.

2. Mehrfachschlauch nach Anspruch 1, dadurch gekennzeichnet, daß die Halteeinrichtung (17) bzw. die Haltewand (24) entlang einer in Schlauchlängsrichtung (14) verlaufenden Solltrennstelle (15') trennbar am benachbarten Pneumatikschlauch (13') befestigt ist.

3. Mehrfachschlauch nach Anspruch 2, dadurch gekennzeichnet, daß er als Dreifachschlauch bestehend aus zwei Pneumatikschläuchen (13, 13') und einem Kabelschlauch (16) ausgebildet ist.

4. Mehrfachschlauch nach Anspruch 2 oder 3, dadurch gekennzeichnet, daß die Schläuche (13, 13', 16) entlang den Solltrennstellen (15, 15') einstückig miteinander verbunden sind.

5. Mehrfachschlauch nach einem der Ansprüche 1 bis 4, dadurch gekennzeichnet, daß er als einstückiges Extrusionsteil ausgebildet ist.

6. Mehrfachschlauch nach einem der Ansprüche 1 bis 5, dadurch gekennzeichnet, daß die Haltewand (24) derart ausgebildet ist, daß die Kabel-Einführöffnung (23) zum Einklipsen von Kabeln (12, 12') elastisch aufweitbar ist.

7. Mehrfachschlauch nach einem der Ansprüche 1 bis 6, dadurch gekennzeichnet, daß die Kabel-Einführöffnung (23) wenigstens im äußeren Bereich eine sich zum Kabelaufnahmeraum (22) hin verjüngende Querschnittsgestalt hat.

8. Mehrfachschlauch nach einem der Ansprüche 1 bis 7, dadurch gekennzeichnet, daß die längsverlaufenden, die Kabel-Einführöffnung (23) begrenzenden Randbereiche (26) der Haltewand (24) nach innen in Richtung zum Kabelaufnahmeraum (22) abgebogen oder abgewinkelt sind.

9. Mehrfachschlauch nach einem der Ansprüche 1 bis 8, dadurch gekennzeichnet, daß zwei Pneumatikschläuche (13, 13') als Speiseschläuche für eine pneumatisch betätigte Einrichtung, zum Beispiel einen Arbeitszylinder (1), ausgebildet sind und der Kabelaufnahmeraum (22) elektrische Kabel (12, 12') enthält, die zum Anschluß von an der pneumatisch betätigbaren Einrichtung vorgesehenen und zu deren Ansteuerung verwendeten Sensoren (8, 9) dienen.

## Claims

1. Multiple hose for electropneumatic applications, with at least two air hoses (13, 13') made of a flexible plastic material releasably attached to each other along a theoretical line of separation (15) extending in the longitudinal direction (14) of the hoses and at least one retainer (17), likewise made of a flexible plastic material, for electric cables (12, 12'), with a cable space (22) extending in the longitudinal direction (14) of the hoses and bounded by a retaining wall (24) while being accessible via slot-like cable insertion opening extending along the entire length of the retaining wall (24), characterized in that the air hoses (13, 13') and the cable space (22) are arranged to extend next to one another in a common plane, the at least one retainer (17) forming the lateral termination of the arrangement, being secured to the immediately adjacent air hose (13') only, and in that the retaining wall (24) is so designed that the cable insertion opening (23) lies in the common plane (18) and laterally opposite the air hoses (13, 13').

2. Multiple hose according to claim 1, characterized in that the retainer (17) or the retaining wall (24) respectively is formed by longitudinally slit hose - hereinafter referred to as cable conduit (16) - the longitudinal slot of which represents the cable insertion opening (23) and which is releasably attached to the adjacent air hose (13') along a theoretical line of separation (15') extending in the longitudinal direction (14) of the hoses, all hoses (13, 13', 16) lying in the common plane (18).

3. Multiple hose according to claim 2, characterized in that it is designed as a triple hose comprising two air hoses (13, 13') and a cable conduit (16).

4. Multiple hose according to claim 2 or 3, characterized in that the hoses (13, 13', 16) are integrally attached to one another along the theoretical lines of separation (15, 15').

5. Multiple hose according to any of claims 1 to 4, characterized in that it is designed as a single extruded part.

6. Multiple hose according to any of claims 1 to 5, characterized in that the retaining wall (24) is so designed that the cable insertion opening (23) can be elastically expanded for clipping the cables (12, 12').

7. Multiple hose according to any of claims 1 to 6, characterized in that the cable insertion opening (23) has a cross-section tapering towards the cable space (22) at least in its external area.

8. Multiple hose according to any of claims 1 to 7, characterized in that the longitudinal edge areas (26) of the retaining wall (24) bounding the cable insertion opening (23) are bent or angled inwards towards the cable space (22).

9. Multiple hose according to any of claims 1 to 8, characterized in that two air hoses (13, 13') are designed as supply hoses for pneumatic equipment such as a cylinder (1), and the cable space (22) contains electric cables (12, 12') for the connection of sensors (8, 9) mounted on the pneumatic equipment and driving it.

## Revendications

1. Tuyau souple multiple pour applications électropneumatiques, comportant au moins deux tuyaux pneumatiques (13, 13') fixés l'un contre l'autre de manière séparable, le long d'un emplacement destiné à la séparation (15), s'étendant dans la direction longitudinale (14) du tuyau et faits d'une matière plastique souple, et comportant au moins un dispositif de maintien (17) pour câbles électriques (12, 12'), disposé sur les tuyaux pneumatiques, également fait d'une matière plastique souple, qui comporte une chambre de logement de câbles (22), s'étendant dans la direction longitudinale (14) du tuyau, délimitée par une paroi de maintien (24), chambre qui est accessible par une ouverture d'introduction de câbles du type fente, s'étendant sur toute la longueur de la paroi de maintien (24), caractérisé en ce que les tuyaux pneumatiques (13, 13') et la chambre de réception de câbles (22) sont disposés côte à côte longitudinalement en s'étendant dans un plan commun, le ou les dispositif(s) de maintien (17) formant la fermeture latérale du dispositif et étant fixé(s) uniquement sur le tuyau pneumatique (13') immédiatement voisin, et en ce que la paroi de maintien (24) est conformée de manière que l'ouverture d'introduction de câbles (23) se situe dans le plan commun (18) et soit orientée de manière à être éloignée latéralement des tuyaux pneumatiques (13, 13').

2. Tuyau souple multiple selon la revendication 1, caractérisé en ce que le dispositif de maintien (17) ou la paroi de maintien (24) sont formés par un tuyau fendu longitudinalement - désigné ci-après par tuyau de câbles (16) -, dont la fente longitudinale forme l'ouverture d'introduction de câbles (23) et qui est fixé sur le tuyau pneumatique (13') voisin, de manière séparable, le long d'un emplacement destiné à la séparation (15'), s'étendant dans la direction longitudinale (14) du tuyau, tous les tuyaux (13, 13', 16) s'étendant dans le plan commun (18).

3. Tuyau souple multiple selon la revendication 2, caractérisé en ce qu'il est conformé en tuyau triple constitué de deux tuyaux pneumatiques (13, 13') et d'un tuyau de câbles (16).

4. Tuyau souple multiple selon la revendication 2 ou 3, caractérisé en ce que les tuyaux (13, 13', 16) sont reliés entre eux d'un seul tenant le long des emplacements destinés à la séparation (15, 15').

5. Tuyau souple multiple selon l'une des revendications 1 à 4, caractérisé en ce qu'il est réalisé en tant qu'élément extrudé d'une seule pièce.

6. Tuyau souple multiple selon l'une des revendications 1 à 5, caractérisé en ce que la paroi de maintien (24) est telle que l'ouverture d'introduction de câbles (23) peut s'élargir élastiquement pour clipser des câbles (12, 12') à l'intérieur.

7. Tuyau souple multiple selon l'une des revendications 1 à 6, caractérisé en ce que l'ouverture d'introduction de câbles (23) présente, au moins dans la zone extérieure, une forme de section transversale se rétrécissant vers la chambre de réception de câbles (22).

8. Tuyau souple multiple selon l'une des revendications 1 à 7, caractérisé en ce que les zones de bordure (26) de la paroi de maintien (24), s'étendant longitudinalement, délimitant l'ouverture d'introduction de câbles (23), sont repliées ou coudées vers l'intérieur, en direction de la chambre de réception de câbles (22).

9. Tuyau souple multiple selon l'une des revendications 1 à 8, caractérisé en ce que deux tuyaux pneumatiques (13, 13') sont conformés en tuyaux d'alimentation pour un dispositif actionné pneumatiquement, par exemple un vérin (1), et la chambre de réception de câbles (22) contient des câbles électriques (12, 12'), qui servent au raccordement de capteurs (8, 9) prévus sur le dispositif actionnable pneumatiquement et utilisés pour sa commande.
